# EUROPEAN PATENT APPLICATION

(11) **EP 4 506 870 A1**
(43) Date of publication of application: **12.02.2025**
(21) Application number: 23189953.5
(22) Date of filing: 07.08.2023
(51) Int. Cl.: G06Q 10/047, G06Q 50/30, G01C 21/26, G01C 21/34

(54) **A TRANSPORT DISRUPTION MANAGEMENT SYSTEM FOR MANAGING TRAVEL DISRUPTION OF PASSENGERS**

(71) Applicant: Hitachi, Ltd., Tokyo 100-8280 (JP)
(72) Inventor: WISETJINDAWAT, Wisinee, London, EC2Y 5AJ (GB); MOFFA, Giulio, London, EC2Y 5AJ (GB); YONEHARA, Miki, London, EC2Y 5AJ (GB); FUKAMI, Misato, London, EC2Y 5AJ (GB)
(74) Representative: Mewburn Ellis LLP

(57) **Abstract**

A transport disruption management system 100 for managing travel disruption of passengers. The transport disruption management system comprises: an analytics module 106, configured to: receive data from one or more sensors located along one or more transport routes of vehicles carrying passengers; and detect or predict a travel disruption event from the received data, a priority determination module 108 configured to: receive, from the analytics module, information indicating that a travel disruption event has been detected or predicted, and determine a travel priority of one or more passengers of a transport vehicle affected by the travel disruption event based on priority determination data; and a resource allocation module 110 configured to allocate mitigation resources to the passengers affected by the travel disruption event, based on the priority determined by the priority determination module and the nature of the detected or predicted travel disruption event.

## Description

### TECHNICAL FIELD

The present disclosure relates to a transport disruption management system for managing travel disruption of passengers.

### BACKGROUND

In recent years, there has been a notable rise in the volume of public transportation services running worldwide. Public transport systems provide a number of benefits to a population, such as the alleviation of traffic congestion and an improvement in population mobility. Furthermore, there are numerous environmental benefits associated with public transport, such as the reduction of carbon emissions, and the improvement of air quality in urban areas. However, much of the population have not adopted public transportation due to issues surrounding the reliability of the services.

Public transportation systems are especially prone to delays. It is common for buses to experience major disruptions due to traffic congestion. These disruptions produce delays which result in passengers becoming frustrated with public transportation services. Therefore, not only do these disruptions cause passengers to be late, but they also dissuade the public from adopting public transport.

One possible solution to minimise the effect of such disruptions, is to use a disruption management system. Conventional disruption management systems aim to detect traffic disruptions and minimise the effect of these disruptions by allocating passengers experiencing disruption an alternative transport option. The delay passengers experience between the occurrence of a traffic disruption and the availability of an alternative travel option is dependent largely on the time taken for the traffic disruption to be detected by the disruption management system. To minimise this delay, it is therefore of importance that disruptions are able to be detected promptly.

However, conventional disruption management systems are often not able to detect traffic disruptions promptly. These conventional systems typically rely on human input from the driver, the passengers, or from an operator of the system to detect disruptions. In such systems, the time taken for a disruption to be responded to is dependent on the promptness of the human report of the disruption. This time varies wildly and often leads to unnecessary passenger delays.

Moreover, conventional disruption management systems fail to allocate their limited transport resources efficiently in the event of disruption. These systems have limited access to passenger data, and so cannot account for the specific circumstances of each passenger, such as the urgency of their journey or their travel preferences. Conventional systems are therefore liable to provide sub-optimal travel arrangements which do not meet the travel needs of their passengers.

The present disclosure was arrived at in light of the above considerations.

### SUMMARY

In a first aspect, embodiments of the present invention provide a transport disruption management system (100) for managing travel disruption of passengers, the transport disruption management system comprising:
an analytics module (106), configured to:
   receive data from one or more sensors located along one or more transport routes of vehicles carrying passengers; and
   detect or predict a travel disruption event from the received data,
a priority determination module (108) configured to:
   receive, from the analytics module, information indicating that a travel disruption event has been detected, and
   determine a travel priority of one or more passengers of a transport vehicle affected by the travel disruption event based on priority determination data; and
a resource allocation module (110) configured to allocate mitigation resources to the passengers affected by the travel disruption event, based on the priority determined by the priority determination module and the nature of the detected travel disruption event.

Advantageously the system is able to detect disruption promptly and reliably, allowing passengers to receive mitigation resources more swiftly. Moreover, the analytics module is capable of estimating the scale of the travel disruption event, and the effect that the disruption will have on the rest of the transport network.

The vehicles managed by the disruption management system may comprise, for example, buses, trains and/or trams.

The data may be LiDAR data, radar data, infrared data, GPS data, accelerometer data and/or any other data capable of describing the location, movement and/or surrounding environment of a transport vehicle. This data may be collected, for example, by any one or more of a LiDAR sensor, a radar sensor, an infrared sensor, a GPS sensor, an accelerometer sensor, etc. These sensors may form part of an Advanced Driver Assistance System (ADAS) of the transport vehicle. These sensors can autonomously gather data which is usable by the analytics module to detect or predict travel disruption events. For example, GPS data may be used to detect that a bus has been halted for an extended time. The GPS data, along with other relevant data, may then be used to detect a travel disruption event.

The priority determination module is configured, by utilising the priority determination data, to account for the personal circumstance of each passenger. The resource allocation module may be configured to take the priority of each passenger, the capacity restraints of the transport network, and the available mitigation options into account in deciding on the mitigation resources to be allocated to each passenger. In this way, each passenger is more likely to be satisfied with the service they receive, and the overall disruption is likely to be minimised.

The data may comprise at least one live video feed of the transport routes, wherein the analytics module analyses the at least one live video feed to detect or predict travel disruption events. The at least one live video feed may be recorded by video cameras which form part of an Advanced Driver Assistance System (ADAS) of the transport vehicle. Live video feeds may be obtained from cameras at stations and/or stops. The use of video cameras advantageously allows an operator of the disruption management system to confirm the presence of a travel disruption event.

The live video feed may be recorded by video cameras positioned on the transport vehicles. In this way, travel disruption events may be detected at any location proximal to a transport vehicle.

The live video feed may be recorded by video cameras positioned along the transport routes. Advantageously, video cameras positioned along the transport routes of the transport vehicles are able to continuously monitor the traffic levels of the portions of the transport routes proximal to the video cameras. Therefore, they are able to swiftly detect travel disruption events, often before the disruption affects a transport vehicle. Such video cameras may form part of a Traffic Management System (TMS), and the transport disruption management system may also form a part of the traffic management system.

The analytics module may perform video object detection, for example through the use of a machine learning classifier, on the live video feed to detect or predict travel disruption events. The use of visual Al to process the live video feed is advantageous as it provides an automatic method to detect travel disruption events from the live video data. This decreases the probability of human error, reduces the human time needed, and improves the rate at which travel disruption events are detected. Furthermore, Al is able to produce metrics such as traffic volume and average traffic, which are useable to predict future traffic congestion.

The analytics module may receive input from a traffic management system to detect or predict travel disruption events and may be configured to predict future travel disruption events. This is advantageous as traffic management systems commonly track traffic flow data, which is useable to predict congestion. Therefore, input from a traffic management system may be used to predict travel disruption events along the intended route for a transport vehicle.

The analytics module may further utilise historical disruption data, located in a database of historical disruption data to predict the impact and/or duration of a detected or predicted travel disruption event.

Furthermore, the analytics module may receive and utilise input from the driver of each transport vehicle. Advantageously, input from a driver may confirm that an automatically detected travel disruption event has been correctly identified by the system. The driver may input that they are experiencing the travel disruption event either on their mobile device, or on a user interface integrated within the driver's space of the transport vehicle.

Moreover, the analytics module may receive and utilise any of: input from passengers of the transport vehicle, and/or live weather data, to detect or predict travel disruptions. Advantageously, input from a passenger may confirm that an automatically detected travel disruption event has been correctly identified by the system. A passenger may input that they are experiencing the travel disruption event on their mobile device. Furthermore, it may be the case that certain weather conditions increase congestion on certain traffic routes. It is therefore advantageous for the analytics module to access live weather data such that travel disruption event may be predicted in response to weather conditions.

The priority determination data may comprise passenger journey data. As such, the priority determination module may be able to prioritise passengers with more available alternative transport options. For example, a passenger may be prioritised if their bus has broken down, and an alternative service is readily available to continue their journey. Furthermore, while in receipt of this data, the priority determination module can prioritise customers travelling on urgent or important journeys. For example, a passenger travelling to a medical operation will receive a high priority, the resource allocation module takes this into account by offering a mitigation option which will allow the passenger to make it to their operation with minimal delay.

The priority determination data may further comprise passenger characteristics data. Characteristics data may be gathered from, for example, personal profiles, historical travel information and/or ticket purchases. In this way, priority may be assigned to passengers based on their individual circumstances. For example, a passenger in a wheelchair will only be offered mitigation options which are wheelchair accessible.

Furthermore, priority determination data may comprise any one or more of: historical travel demand data, ticket sales data, and weather data. Moreover, priority determination data may comprise psycho-demographic or psychographic segmentation data. This data allows the priority determination module to make a more informed decision on passenger priority.

The resource allocation module may allocate the passengers into two groups. The first allocated group is a movable group comprising passengers which are allocated a mitigation option in which they are provided alternative travel arrangements. The second allocated group is a static group comprising passengers which are allocated a mitigation option in which they are not provided alternative travel arrangements.

This advantageously provides a mitigation option for all passengers, even those without an immediate alternative travel option. Static group passengers may be offered, for example, a coupon, a ticket extension or a hotel booking.

Furthermore, the resource allocation module may allocate the passengers into either the movable group or the static group based on the availability of the transport vehicles of the transport system, passenger characteristics data and the priority determined by the priority determination module.

The disruption management system may include any one, or any combination insofar as they are compatible, of the optional features set out herein.

In a second aspect, embodiments of the invention provide a method for managing the travel disruption of passengers, the method comprising:
analysing data collected by one or more sensors located along one or more transport routes of vehicles carrying passengers;
detecting or predicting a travel disruption event from the received data,
determining, in response to detecting or predicting a travel disruption event, a travel priority of one or more passengers of a transport vehicle affected by the travel disruption event based on priority determination data, and
allocating mitigation resources to the passengers affected by the traffic disruption mitigation options based on the determined priority and the nature of the detected or predicted travel disruption event.

The invention includes the combination of the aspects and preferred features described except where such a combination is clearly impermissible or expressly avoided.

Further aspects of the present invention provide: a computer program comprising code which, when run on a computer, causes the computer to perform the method of the second aspect; a computer readable medium storing a computer program comprising code which, when run on a computer, causes the computer to perform the second aspect; and a computer system programmed to perform the method of the second aspect.

### BRIEF DESCRIPTION OF THE DRAWINGS

Embodiments and experiments illustrating the principles of the invention will now be discussed with to the accompanying drawings in which:
- **Figure 1**: shows a flow chart illustrating the operation of the travel disruption management system;
- **Figure 2**: shows a flow chart of the inputs/outputs of the analytics module;
- **Figure 3**: shows a flow chart of the inputs/outputs of the priority determination module;
- **Figure 4**: shows a flow chart of the inputs/outputs of the resource allocation module;
- **Figure 5**: shows a first part of a flow chart of the disruption management module;
- **Figure 6**: shows a second part of a flow chart of the disruption management module;
- **Figure 7**: shows a table containing example data used by the analytics module;
- **Figure 8**: shows a table containing example priority determination data.

### DETAILED DESCRIPTION

Aspects and embodiments of the present invention will now be discussed with reference to the accompanying figures. Further aspects and embodiments will be apparent to those skilled in the art.

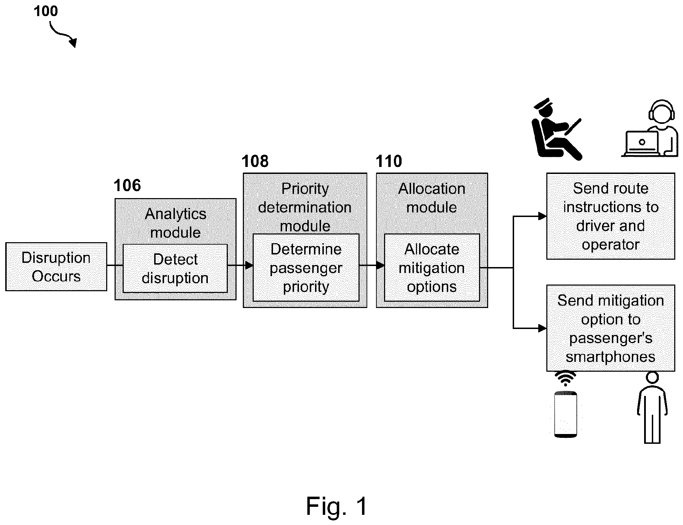

Figure 1 is a flow chart illustrating the operation of the travel disruption management system 100. The analytics module 106 continuously records sensor data along the transport routes. It is typical that these sensors comprise cameras positioned on the transport vehicles, along the transport routes, or in both of these positions, to record live video of the surrounding traffic environment. The analytics module performs constant analysis of this live video. This analysis may advantageously be achieved via video object detection, or via another computer vision or artificial intelligence technique. For example, an ADAS system provided in a vehicle can constantly detect objects nearby and notify the driver of any possible collisions. If it finds a collision has actually occurred, the ADAS system can automatically inform the analytics module of the collision event, the type of objects involved, location of the collision, etc. Also, with driver input providing extra information such as human injuries and severity, the analytics module can determine a more accurate level of the disruption. In this sense, the analytics module may include the ADAS system as part thereof, or may be connected to an ADAS system and operate in the manner described. On occurrence of a travel disruption event in the vicinity of the vehicle, the analytics module detects this disruption, and instructs the priority determination module 108 to determine the priority of each passenger of the affected bus. For example, another road user may collide with the being monitored vehicle or may collide with another vehicle not managed by the travel disruption management system (e.g. a third party vehicle). This would constitute a travel disruption event, as the natural flow of traffic is interrupted. Another examples of travel disruption events would include: road closures; cancellation of scheduled services; excessive and unforeseen levels of traffic; etc.

Once a travel disruption event has been detected the priority determination module determines the priority of the passengers on the basis of priority determination data supplied to the system. Next, the resource allocation module 110 allocates each passenger a mitigation option based on the priority supplied by the priority determination module. Advantageously, the resource allocation module may allocate passengers into two groups: a static group and a moveable group. Mitigation options provided to the static group may comprise, for example; a discount voucher for a local cafe, or an extended transport ticket for future transport options. Conversely, passengers in the movable group are provided with a mitigation option consisting of alternative transportation to their destination. For example, a recovery bus or alternative route. In this way, in the event of a disruption, the limited resources of the transport system can be managed to provide the most optimum outcomes for all of the affected passengers. The decided mitigation options are then communicated to the passengers, drivers, and operators. Any involved drivers and operators receive information pertaining to the new movable route or routes, and their required actions. The passengers are each informed of their personal mitigation option via their smartphones.

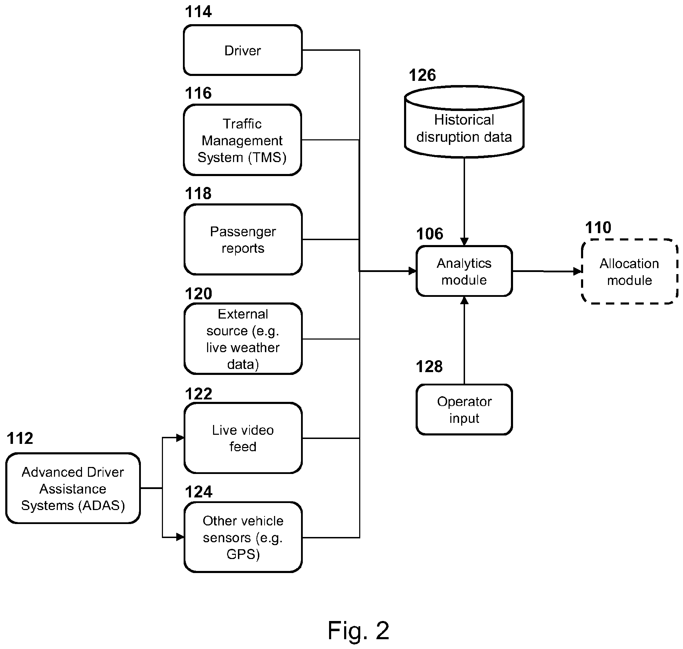

Figure 2 shows a flow chart of the inputs/outputs of the analytics module 106. A live video feed 122 and other sensor data 124 (e.g. GPS data) are recorded by an Advanced Driver Assistance System (ADAS) 112 of the vehicle. This data is fed into the analytics module. The analytics module also receives input from the driver, who provides information such as the scale of the disruption (as they perceive it) and other information which the ADAS is unable to detect (such as human injuries, severity etc.), and a prediction of the time that the disruption will last for. The analytics module is informed by a Traffic Management System (TMS) 116. The TMS provides information relating to traffic flow and congestion. Moreover, the analytics module is provided with passenger reports 118.

Typically, these reports are made on the mobile devices of the passengers, and provide conformation of disruption events. The analytics module also receives input from an external source 120 such as a live weather source. Furthermore, the analytics module has access to a database of historical disruption data 126, which can be used to improve accuracy when estimating the scale and/or duration of a disruption. The analytics module also receives input from an operator of the disruption management system 128. The analytics module analyses the aforementioned data to thereby detect travel disruption, and in some embodiments to detect the scale of the disruption, and passes this on to the resource allocation module 110. Additionally, the analytics system may provide a trigger to the priority determination module causing it to undertake it's processing.

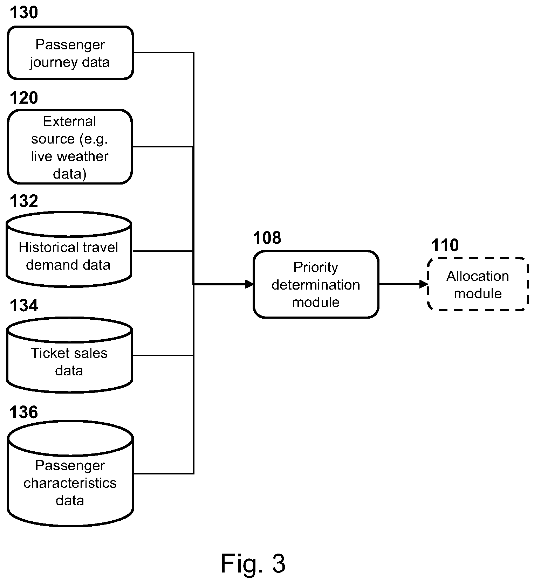

Figure 3 shows a flow chart of the inputs/outputs of the priority determination module 108. The priority determination module is supplied with passenger journey data 130, which contains information about the current journey of each passenger. The priority determination module is also supplied with data from an external source 120, such as a live weather source. Furthermore, the priority determination module has access to databases containing historical travel demand data 132, ticket sales data 134, and passenger characteristics data 136. The priority determination module, in view of this input, determines a priority order of passengers and outputs this to the resource allocation module 110. For example, journeys can be categorized by destinations. Destinations to important locations such as hospitals, airports, central train stations, etc. can be classified as high priority. Weights are given differently to each journey according to the destination, and the resource allocation module can then use an optimisation model that takes into account the journeys' weight and allocate the resources to optimise an objective function such as the total journey times etc.

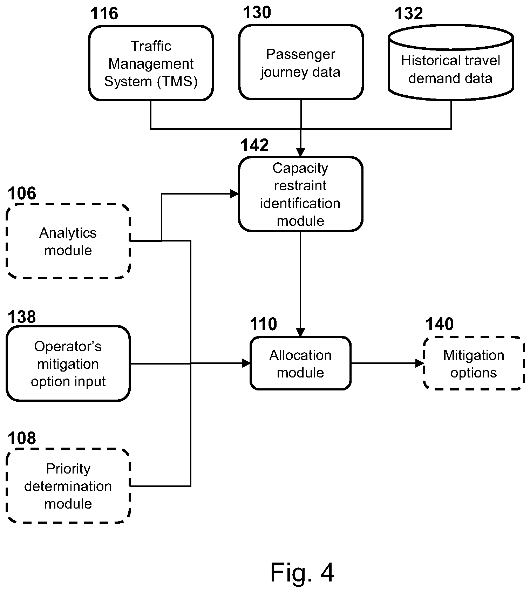

Figure 4 shows a flow chart of the inputs/outputs of the resource allocation module 110. The resource allocation module in this example receives input from: the analytics module 106, the priority determination module 108, and the operator. In this example, each day, the operator inputs the available mitigation options 138 for that day. In other examples the mitigation options may be predefined for a longer or shorter period. The allocation is further informed by the capacity restraint identification module 142, which takes input from the Traffic Management System (TMS) 116, passenger journey data 130, and accesses the historical travel demand database 132. The capacity restraint system may also receive input on current driver shifts and the battery/fuel level of transport vehicles of the network. The capacity restraint identification module analyses both the available resources of the transport system, as well as any restraint on the capacity for movable mitigation options to be offered. This system then inputs this analysis to the resource allocation module, which allocates each passenger a mitigation option 140.

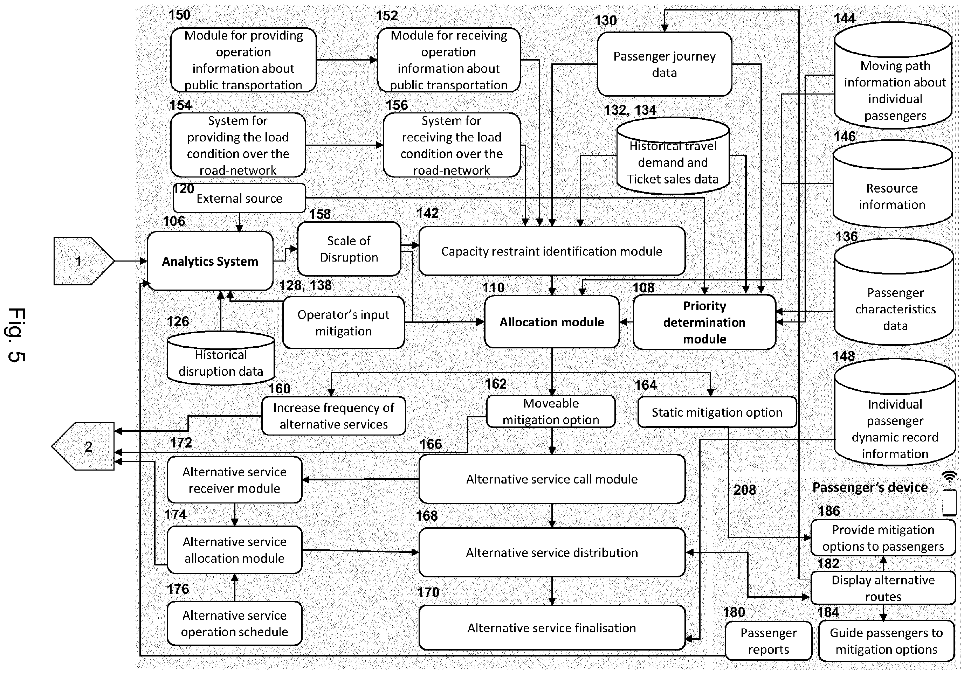

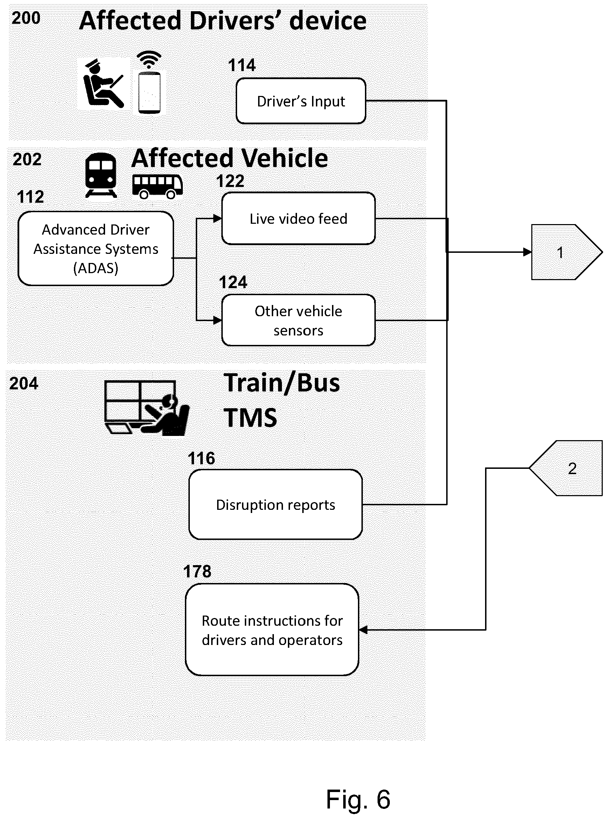

Figures 5 and 6 each show a part of a flow chart of the disruption management system 100. The connectors labelled 1 and 2 indicate inputs and outputs respectively. In the event of a travel disruption event, the analytics module 106 detects this incident via the input of sensor data and reports. The driver of the transport vehicle accesses their device 200 to complete an initial assessment of the incident 114, which is sent to the analytics module. This assessment is supported by sensor data collected by the affected vehicle 202, as well as input from the driver. The sensors of the affected vehicle form a part of a larger Advanced Driver Assistance System (ADAS) 112, which comprises multiple video cameras which each capture a live video feed 122, as well as other vehicle sensors 124, such as GPS. This sensor data is also sent to the analytics module. Furthermore, the Traffic Management System (TMS) 204 provides input on any other travel disruption event reports 116 in the network. Moreover, any affected passengers are able to input their own passenger report 180 using a mobile device 208. As well as this, the analytics module has access to a database of historical disruption data 126. The analytics module also receives input on the available mitigation options for the day from the operator of the system 128. The analytics module 106 analyses this aforementioned input and calculates the scale (i.e. impact and/or duration) of disruption 158 of the incident. The scale of disruption is then forwarded onto the capacity restraint identification module 142 and the resource allocation module 110.

The capacity restraint identification module 142 assesses the availability of different transport routes and travel options of the transport network in view of the network capacity and demand. For example, the assessment to understand the capacity of the transport network after the disruption event could use a simulation module. The simulation module can mimic the circumstance of the disruption event on a simulation of the transport network and the result will illustrate an impact of the disruption event (such as congestion level, increases in travel time on each road link, increase congestion inside buses / trains nearby to the event etc.)The capacity restraint identification module receives input from the system for receiving operation information about public transportation 152, which itself receives input from the system for providing operation information about public transportation 150. The capacity restraint identification module receives further input from the system for receiving the load condition over road-network 156, which itself receives input from the system for providing the load condition over road-network 154. Furthermore, the system has access to a database containing historical travel demand data 132 and ticket sales data 134. Finally, the system has access both to passenger journey data 130, and to a database of moving path information about each individual passenger 144. Moving path data may comprise data relating to previous travel paths and transportation services used. The capacity restraint identification module 142 uses these inputs to assess the availability of different transport routes and travel options of the transport network, and forwards this information onto the resource allocation module 110.

The priority determination module 108 determines the priority of passengers based on priority determination data. This priority determination data comprises passenger characteristics data 136, the moving path information for each passenger 144, passenger journey data 130, historical travel demand 132 and ticket sales data 134, as well as data from an external source 120 such as weather data.

The resource allocation module 110 allocates passengers mitigation options based on the input from the operator 138, the scale of disruption 158, the capacity restraint identification module 142, databases containing information on the moving path information of individual passengers 144 and resource information 146, and the priority determination module 108. For example, the resource allocation module can be an optimisation module that takes into account the weight of each journey and allocate resources to optimise an objective function such as total journey times etc., subject to the resource constraints. As a result of the resource allocation modules decision, alternative services of the network may increase in frequency 160. In this case, the TMS 204 receives new route instructions 178. Furthermore, moveable mitigation options 162 and static mitigation options 164 are determined for each passenger. For movable mitigation options in which alternative service provides are required, the relevant alternative service is called 166. This call is received 172 such that the alternative service may allocate their service 174, considering their own operation schedule 176. This service allocation is relayed to the TMS such that the drivers and operators are informed of their new route instructions. The alternative service is then distributed 168 to passenger's mobile devices 208. After considering input from a database containing dynamic records of individual passengers 148, the alternative service is finalised 170. Information stored in the dynamic records of individual passengers includes, for example, real-time information about a passenger's movements. The calculated mitigation options are then generated on the passenger's mobile devices 208 (e.g. by display 192), wherein both static and movable options are provided 186. In the event that a passenger is provided with a moveable mitigation option, they are guided to their next transport service 184.

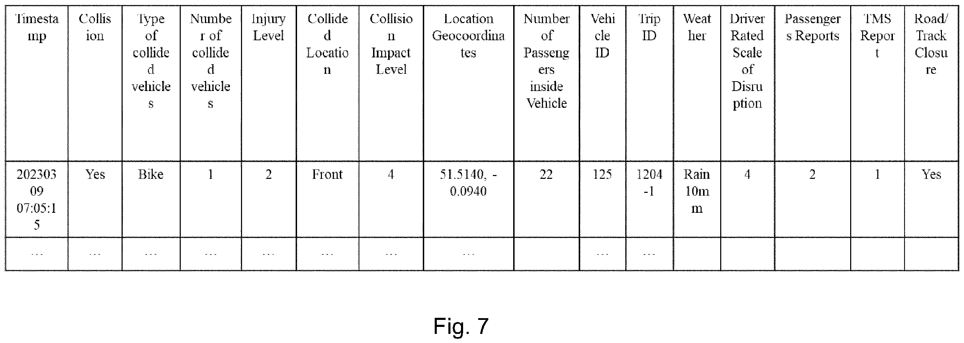

Figure 7 shows a table containing example data used by the analytics module. The table comprises a single row of data which is representative of data relating to a single detected traffic incident. Each metric is either the direct output of a sensor, or the product of analysis by the analytics module. The data is the result of the inputs shown in Figure 2. This data is used to detect travel disruption events, and to evaluate the scale of these events. In this example the data includes: a timestamp of the event; whether the event is a collision; what type of vehicle was involved in the collision; the number of vehicles involved with the collision; an injury level (e.g. from 1 - 10); a collision location; a collision impact level (e.g. from 1 - 10); a location of the collision; a number of passengers inside the vehicle; a vehicle identifier; a trip identifier; information relating to the weather at the time of the disruption; a rating from a driver of the vehicle as to the scale of the disruption (e.g. from 1 - 10); a TMS report (containing, for example, the amount of delay on directly and indirectly affected vehicles, and any additional incident information collected by the TMS system); and an indication that the road or track has closed.

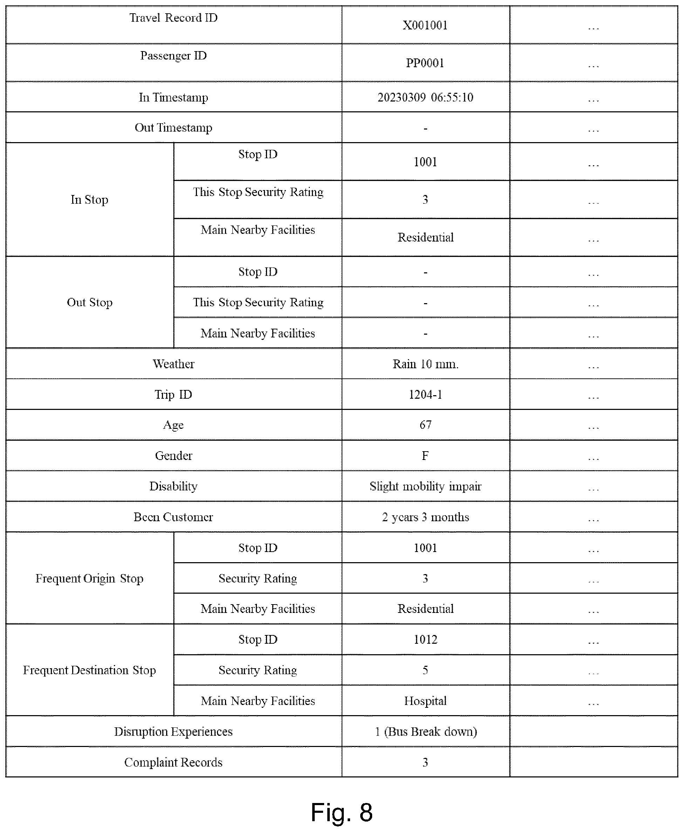

Figure 8 shows a table containing example priority determination data. The table comprises a single column of data which is representative of data relating to a single passenger. The various sources of data are shown in the flowchart of Figure 3. This data is used determine the priority of passengers such that they may be allocated appropriate mitigation options. The data includes: a travel record ID, by which this data is indexed in database of priority determination data; a passenger ID, identifying the passenger; an in timestamp, identifying the time at which the passenger began their journey; an out timestamp, identifying the time at which the passenger ended their journey; information relating to the stop at which the passenger starter their journey (In Stop), including the stop ID, a stop security rating, and nearby facilities; information relating to the stop at which the passenger finished their journey (Out Stop), including the stop ID, a stop security rating, and nearby facilities; data relating to the weather; a trip ID, identifying the specific journey being undertaken; the age of the passenger; the gender of the passenger; any known disabilities of the passenger; the time during which the passenger has been a customer of the travel network; information relating to the stop that the passenger most frequent begins their journey at (Frequent Origin Stop), including a stop ID, security rating, and nearby facilities; information relating to the stop that the passenger most frequently ends their journey at (Frequent Destination Stop), including a stop ID, security rating, and nearby facilities; a history of the number of travel disruption events experienced by the passenger; and a number of complaint records from the passenger.

The systems and methods of the above embodiments may be implemented in a computer system (in particular in computer hardware or in computer software) in addition to the structural components and user interactions described.

The term "computer system" includes the hardware, software and data storage devices for embodying a system or carrying out a method according to the above described embodiments. For example, a computer system may comprise a central processing unit (CPU), input means, output means and data storage. The computer system may have a monitor to provide a visual output display. The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

While the disclosure has been described in conjunction with the exemplary embodiments described above, many equivalent modifications and variations will be apparent to those skilled in the art when given this disclosure. Accordingly, the exemplary embodiments of the disclosure set forth above are considered to be illustrative and not limiting. Various changes to the described embodiments may be made without departing from the spirit and scope of the disclosure.

In particular, although the methods of the above embodiments have been described as being implemented on the systems of the embodiments described, the methods and systems of the present disclosure need not be implemented in conjunction with each other, but can be implemented on alternative systems or using alternative methods respectively.

The features disclosed in the description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the disclosure in diverse forms thereof.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A transport disruption management system (100) for managing travel disruption of passengers, the transport disruption management system comprising:
an analytics module (106), configured to:
receive data from one or more sensors located along one or more transport routes of vehicles carrying passengers; and
detect or predict a travel disruption event from the received data,
a priority determination module (108) configured to:
receive, from the analytics module, information indicating that a travel disruption event has been detected or predicted, and
determine a travel priority of one or more passengers of a transport vehicle affected by the travel disruption event based on priority determination data; and
a resource allocation module (110) configured to allocate mitigation resources to the passengers affected by the travel disruption event, based on the priority determined by the priority determination module and the nature of the detected or predicted travel disruption event.

2. The disruption management system (100) of claim 1, wherein:
the data comprises at least one live video feed (122) of the transport routes, wherein
the analytics module (106) analyses the at least one live video feed to detect or predict travel disruption events.

3. The disruption management system (100) of claim 2, wherein the analytics module (106) performs video object detection on the live video feed (122) to detect or predict travel disruption events.

4. The disruption management system (100) of any of the previous claims, wherein the analytics module (106) receives input from a traffic management module (116) to detect or predict travel disruptions.

5. The disruption management system (100) of any of the previous claims, wherein the analytics module (106) has utilises historical disruption data, located in a database of historical disruption data (126), to predict the impact and/or duration of a detected or predicted travel disruption event.

6. The disruption management system (100) of any of the previous claims, wherein the analytics module (106) receives and utilises input from the driver of one or more transport vehicle (114) to detect or predict travel disruption events.

7. The disruption management system (100) of any of the previous claims, wherein the analytics module (106) receives and utilises:
input from the passengers of each transport vehicle (118), and/or
live weather data (120),
to detect or predict travel disruption events.

8. The disruption management system (100) of any of the previous claims, wherein the priority determination data comprises passenger journey data (130).

9. The disruption management system (100) of any of the previous claims, wherein the priority determination data comprises passenger characteristics data (136).

10. The disruption management system (100) of any of the previous claims, wherein the priority determination data comprises any one or more :
historical travel demand data (132),
ticket sales data (134), and
weather data (120).

11. The disruption management system (100) of any of the previous claims, wherein the resource allocation module (110) allocates the passengers into two groups:
a movable group comprising passengers which are allocated a mitigation option including alternative travel arrangements, and
a static group comprising passengers which are allocated a mitigation option in which they are not provided alternative travel arrangements.

12. The disruption management system (100) of claim 11, in which the resource allocation module (110) allocates the passengers into either the movable group or the static group based on an availability of the transport vehicles of the transport system, and the priority determined by the priority determination module.

13. The disruption management system (100) of any preceding claim, wherein the resource allocation module (110) is configured to select mitigation resources for allocation from the following:
an allocation of one or more vehicles to an existing service;
an allocation of one or more vehicles to a new service; and
an extension to the validity time of one or more tickets.

14. The disruption management system (100) of any preceding claim, wherein the analytics module (106) is configured to estimate a duration of recovery associated with the detected or predicted travel disruption event, and the resource allocation module (110) is configured to utilise the estimated duration when allocating the mitigation resources.

15. A method for managing the travel disruption of passengers, the method comprising:
analysing data collected by one or more sensors located along one or more transport routes of vehicles carrying passengers;
detecting or predicting a travel disruption event from the received data, determining, in response to detecting or predicting a travel disruption event, a travel priority of one or more passengers of a transport vehicle affected by the travel disruption event based on priority determination data, and
allocating mitigation resources to the passengers affected by the traffic disruption mitigation options based on the determined priority and the nature of the detected or predicted travel disruption event.
